(19)

**Europäisches Patentamt**
**European Patent Office**
**Office européen des brevets**

(11) **EP 1 229 411 B1**

(12) **EUROPÄISCHE PATENTSCHRIFT**

(45) Veröffentlichungstag und Bekanntmachung des Hinweises auf die Patenterteilung:
**11.03.2009 Patentblatt 2009/11**

(51) Int Cl.:
***G05B 19/19*** *(2006.01)*

(21) Anmeldenummer: **02001455.1**

(22) Anmeldetag: **21.01.2002**

(54) **Steuerungsverfahren sowie Regelungsstruktur zur Bewegungsführung, Vorsteuerung und Feininterpolation von Objekten in einem Drehzahlreglertakt, der schneller als der Lagereglertakt ist**

Control process and structure of regulation for the motion control, feed forward and fine interpolation of objects in a rotation speed regulator cycle which is faster than the position regulator cycle

Procédé de commande et structure de régulation pour la commande du déplacement, la commande de l'action positive et l'interpolation fine d'objects dans un cycle de régulation de la vitesse angulaire qui est plus rapide que le cycle de régulation de la position

(84) Benannte Vertragsstaaten:
**DE FR GB**

(30) Priorität: **02.02.2001 DE 10104712**

(43) Veröffentlichungstag der Anmeldung:
**07.08.2002 Patentblatt 2002/32**

(73) Patentinhaber: **SIEMENS AKTIENGESELLSCHAFT**
**80333 München (DE)**

(72) Erfinder:
• **Grohmann, Thomas**
**91099 Poxdorf (DE)**

• **Künzel, Stefan**
**91056 Erlangen (DE)**
• **Papiernik, Wolfgang, Dr.**
**91077 Neunkirchen (DE)**
• **Quaschner, Bernd**
**91091 Grossenseebach (DE)**
• **Seeger, Guido, Dr.**
**91083 Baiersdorf (DE)**
• **Welker, Johannes**
**92318 Neumarkt (DE)**

(56) Entgegenhaltungen:
**EP-A- 0 270 059     EP-A- 0 844 542**

EP 1 229 411 B1

**Beschreibung**

Die Erfindung bezieht sich auf ein Steuerungsverfahren und eine korrespondierende Regelungsvorrichtung zur Bewegungsführung von numerisch gesteuerten Werkzeugmaschinen, Robotern oder dergleichen mit einer in einem Antriebsteil angeordneten Drehzahlregelung mit einem Drehzahlregeltakt und einer übergeordneten, auf ein Steuerungsteil und den Antriebsteil verteilten Lageregelung, wobei von dem steuerungsseitigen Teil der Lageregelung in einem vergleichsweise langsameren Lageregeltakt Geschwindigkeitssollwerte als Führungsgröße vorgegeben werden.

Häufig wird für eine komplexe Bewegungsführung mit mehreren Antrieben eine zentrale numerische Steuerung (im folgenden als NC abgekürzt) eingesetzt, die die Bewegungsführung koordiniert und Sollwerte an autonom arbeitende Antriebsregelungen ausgibt. Da die Berechnungen für die koordinierte Bewegungsführung im allgemeinen komplex sind und diese Berechnungen für mehrere Achsen erfolgen müssen, ist die Rechenzeitbelastung der NC meist größer als die Rechenzeitbelastung der einzelnen Antriebsregelungen. Deshalb ist der Abtasttakt (Periodendauer) der Antriebsregelung kleiner und der Rechentakt (Frequenz) in der Regel deutlich größer als der der NC.

Häufig werden trotzdem die Lageregler für jede Achse in der NC gerechnet, um alle Informationen für die Koordinierung der Achsbewegungen zusammen zu verarbeiten und den Antrieb von zahlreichen Zusatzaufgaben wie Referenzieren zu entlasten. Verlagert man die Lageregler in die Antriebe, gewinnt man zwar Rechenzeit bei der NC und hat eine gleichmäßigere Rechenzeitaufteilung, jedoch hat die NC nicht mehr die vollständige Kontrolle, die für eine koordinierte Bewegung notwendig sind.

Die Europäische Patentschrift EP 0844542B1 beschreibt daher ein Verfahren, bei dem die Lageregler sinnvoll auf die NC und die Antriebe verteilt sind, wobei die Regelungsdynamik des Lagereglers vom einem vergleichsweise schnellen Abtasttakt des einzelnen Antriebs bestimmt wird. Dieses Verfahren verfügt aber nur über einen einfachen Feininterpolator und alle Vorsteuerungswerte werden noch im vergleichsweise langsamen Lagereglertakt der NC verarbeitet. Der lineare Feininterpolator führt beispielsweise zu Drehmomentschwankungen im Lagereglertakt der NC, was sich auf die Mechanik negativ auswirkt. Eine bisher noch nicht realisierte Vorsteuerung im Antriebstakt würde eine enorme Steigerung der Wegtreue mit sich bringen.

Herkömmliche Lösungsansätze mit einer Anordnung des Lagereglers in der NC führen zu einer geringen Lagereglerdynamik und Wegtreue. Eine alternative Anordnung des Lagereglers im Antrieb führt dagegen zu erhöhtem Funktionsumfang im Antrieb sowie erhöhtem Kommunikationsbedarf zwischen Antrieb und NC. Außerdem muss durch den erhöhten Funktionsumfang im Antrieb in der Regel der Abtasttakt des Antriebs vergrößert werden, was im Hinblick auf die Regeldynamik unerwünscht ist. Weiterhin ist die Wegtreue bei einer Vorsteuerung im Lagereglertakt merklich schlechter.

Aufgabe der Erfindung ist es daher, eine Steigerung der Wegtreue für die eingangs genannten Steuerungsverfahren oder Regelungsstrukturen zu erreichen, indem eine Feininterpolation und Vorsteuerung im Antriebstakt ermöglicht wird.

Gemäß der vorliegenden Erfindung wird diese Aufgabe dadurch gelöst, dass das eingangs genannte Steuerungsverfahren weitergebildet wird, indem von dem steuerungsseitigen Teil der Lageregelung vorgegebene Geschwindigkeitssollwerte antriebsseitig zur Ermittlung eines konstanten Anteils eines Lagesollwert-Polynoms dienen, dessen variabler Anteil anhand einer von einer steuerungsseitigen Bahnberechnung jeweils im Lageregeltakt vorgegebenen gewünschten Achsgeschwindigkeit und mittleren Achsgeschwindigkeit während des letzten Lageregeltaktes antriebsseitig im Drehzahlregeltakt als Feinlageanteil ermittelt wird, der eingangsseitig auf den antriebsseitigen Teil der Lageregelung aufgeschaltet wird und zur Lage-Feininterpolation dient.

Um die Vorteile des in der EP 0 844 542 B1 beschriebenen Verfahrens zu erhalten, werden zur Ermittlung des konstanten Anteils des Lagesollwert-Polynoms im Lageregeltakt erfasste Lageistwerte als erste Regelgröße eingangsseitig auf den steuerungsseitigen Teil der Lageregelung zurückgeführt und wird zusätzlich die Differenz aus im Drehzahlregeltakt erfassten Lageistwerten und im Lageregeltakt erfassten Lageistwerten als zweite Regelgröße eingangsseitig auf den antriebsseitigen Teil der Lageregelung zurückgeführt, wobei die Verknüpfung der Ausgangswerte der beiden übergeordneten Lageregelungsteile der Drehzahlregelung als Geschwindigkeitssollwerte zugeführt werden.

Solche Vorteile sind im besonderen die erhöhte Dynamik eines Lageregelkreises, ohne dass der dazu erforderliche Rechenaufwand im Antrieb oder auf Seiten der numerischen Steuerung erheblich erhöht wird. Es bleibt nach wie vor eine zentrale Kenntnis aller Zustände der Achsen bzw. Achsverbände vorhanden. Die regelungstechnisch unwichtigeren Vorgänge erfolgen weiterhin in der NC. Diese wird somit nicht zusätzlich belastet. Hinzu kommt, dass Lageistwerte inkrementell in einem Signalprozessor verarbeitet werden können, wodurch keine sonst erforderlichen Gleitkommazahlen verarbeitet werden müssen. Dies bringt einen erheblichen Rechenzeitgewinn mit sich.

Dabei hat es sich als vorteilhaft herausgestellt, wenn der antriebsseitige Teil der Lageregelung mit derselben Proportional-Verstärkung wie der steuerungsseitige Teil der Lageregelung betrieben wird.

Eine weitere vorteilhafte Ausgestaltung des Steuerungsverfahrens gemäß der vorliegenden Erfindung ermittelt das Lagesollwert-Polynom antriebsseitig aus Polynomstücken, die jeweils für die Dauer eines Lageregeltaktes gültig sind, insbesondere als Spline-Funktion. Dabei ist weiter von Vorteil, wenn das Lagesollwert-Polynom antriebsseitig derart ermittelt wird, dass die Geschwindigkeit an den Polynomübergängen stetig ist. Mit dem Feinlageanteil des Lagesollwertpolynoms werden die Lagesollwerte im Antrieb dann im Drehzahlreglertakt feininterpoliert.

Wenn als Lagesollwert-Polynom antriebsseitig ein Polynom vom Grad 3 oder höher ermittelt wird, so kann eine Drehzahlvorsteuerung im Drehzahlreglertakt erreicht werden, indem der variable Anteil des Lagesollwert-Polynoms zur Ermittlung eines Drehzahlvorsteuerwertes differenziert wird, welcher der Drehzahlregelung eingangsseitig aufgeschaltet wird.

Dabei empfiehlt es sich, einen steuerungsseitigen Lagesollwert und den variablen Anteil des Lagesollwert-Polynoms dynamisch anzupassen, indem diese um eine Symmetrierzeit verzögert werden.

Wenn als Lagesollwert-Polynom antriebsseitig ein Polynom vom Grad 3 oder höher ermittelt wird, dessen variabler Anteil zweimal differenziert wird, so lässt sich darüber hinaus eine Drehmomentvorsteuerung im Antriebstakt erreichen, indem anhand des erhaltenen Wertes und einem Trägheitsmoment des Antriebs ein Drehmomentvorsteuerwert bestimmt wird, welcher einer der Drehzahlregelung nachgeschalteten Stromregelung eingangsseitig aufgeschaltet wird. Auch hierbei empfiehlt sich eine dynamische Anpassung, indem der Drehzahlvorsteuerwert um die Symmetrierzeit verzögert wird.

Um die im vorangehenden geschilderten Maßnahmen des Steuerungsverfahrens gemäß der vorliegenden Erfindung auf einfache Art und Weise realisieren zu können, wird darüber hinaus eine Regelungsstruktur geschaffen, welche ebenfalls zur Lösung der eingangs gestellten Aufgabe geeignet ist. Dies geschieht durch eine Regelungsvorrichtung zur Bewegungsführung von numerisch gesteuerten Werkzeugmaschinen, Robotern oder dergleichen mit

- einem antriebsseitigen Drehzahlregler mit einem Drehzahlreglertakt,
- einem übergeordneten antriebsseitigen Lageregler mit dem Drehzahlreglertakt und
- einem ebenfalls übergeordneten steuerungsseitigen Lageregler mit einem vergleichsweise langsameren Lagereglertakt, der Geschwindigkeitssollwerte als Führungsgröße liefert,

die durch folgendes weiteres Merkmal weitergebildet wird:

- ein antriebsseitiges Rechenmittel, dem von einer steuerungsseitigen Bahnberechnung jeweils im Lagereglertakt eine gewünschte Achsgeschwindigkeit und eine mittlere Achsgeschwindigkeit während des letzten Lageregeltaktes vorgegeben werden, mit dem anhand dieser Informationen im Drehzahlreglertakt ein Feinlageanteil ermittelbar ist, mit dem der antriebsseitige Lageregler eingangsseitig angesteuert wird.

Auch hierbei hat es sich als von Vorteil erwiesen, wenn

- im Lagereglertakt erfasste Lageistwerte dem steuerungsseitigen Teil der Lageregelung als eingangsseitige Regelgröße dienen,
- die Differenz aus im Drehzahlregeltakt erfassten Lageistwerten und im Lageregeltakt erfassten Lageistwerten dem antriebsseitigen Lageregler als eingangsseitige Regelgröße dient und
- die Verknüpfung der Ausgangswerte der beiden übergeordneten Lageregler dem Drehzahlregler als Geschwindigkeitssollwerte zugeführt werden.

Dabei empfiehlt es sich, den antriebsseitigen Lageregler mit derselben Proportional-Verstärkung zu betreiben wie den steuerungsseitigen Lageregler.

Bei einer vorteilhaften Ausführung der Regelungsstruktur der Erfindung liefert das Rechenmittel den Feinlageanteil in Form von Polynomstücken eines Lagesollwert-Polynoms, insbesondere vom Grad 3 oder höher, die jeweils für die Dauer eines Lagereglertaktes gültig sind. Als besonders vorteilhaft hat es sich dabei erwiesen, wenn Polynomstücke derart bereitstellbar sind, dass die Geschwindigkeit an den Polynomübergängen stetig ist.

Ein Vorsteuerung der Drehzahl im Drehzahlreglertakt wird ermöglicht, indem das Rechenmittel ein Mittel zur Differenziation umfasst, mit dem Polynomstücke zur Ermittlung eines Drehzahlvorsteuerwertes differenzierbar sind, welcher dem Drehzahlregler eingangsseitig aufgeschaltet wird.

Dabei hat es sich als günstig herausgestellt, wenn eine dynamische Anpassung erfolgt, indem

- dem steuerungsseitigen Lageregler ein Mittel zur Symmetrierung von Lagesollwerten vorgeschaltet ist und
- das antriebsseitige Rechenmittel ein weiteres Mittel zur Symmetrierung des Feinlageanteils umfasst.

Wenn mit dem Mittel zur Differenziation Polynomstücke zweimal differenziert werden, wobei anhand des erhaltenen Wertes und einem Trägheitsmoment des Antriebs ein Drehmomentvorsteuerwert bestimmbar ist, welcher einem dem Drehzahlregler nachgeschalteten Stromregler eingangsseitig aufschaltbar ist, so lässt sich darüber hinaus auch eine Drehmomentvorsteuerung im Drehzahlreglertakt erreichen.

Auch hierbei ist eine dynamische Anpassung von Vorteil, indem das antriebsseitige Mittel zur Symmetrierung auch zur zeitlichen Verzögerung des Drehzahlvorsteuerwertes dient.

Weitere Vorteile und Einzelheiten der vorliegenden Erfindung ergeben sich anhand der folgenden Schilderung eines vorteilhaften Ausführungsbeispieles sowie im Zusammenhang mit den Figuren. Es zeigen:

FIG 1    ein Blockschaltbild einer P-Lageregelung mit Rückführung der Lagedifferenzen und mit erfindungsgemäßen Maßnahmen zur Feininterpolation und Vorsteuerung im Drehzahlreglertakt,

FIG 2    ein Simulationsergebnis einer herkömmlichen P-Lageregelung mit Rückführung der Lage im Drehzahlreglertakt bei sinusförmigem Lagesollwert und

FIG 3    ein Simulationsergebnis bei ebenfalls sinusförmigem Lagesollwert, aber mit der erfindungsgemäßen Feininterpolation und Vorsteuerung im Drehzahlreglertakt.

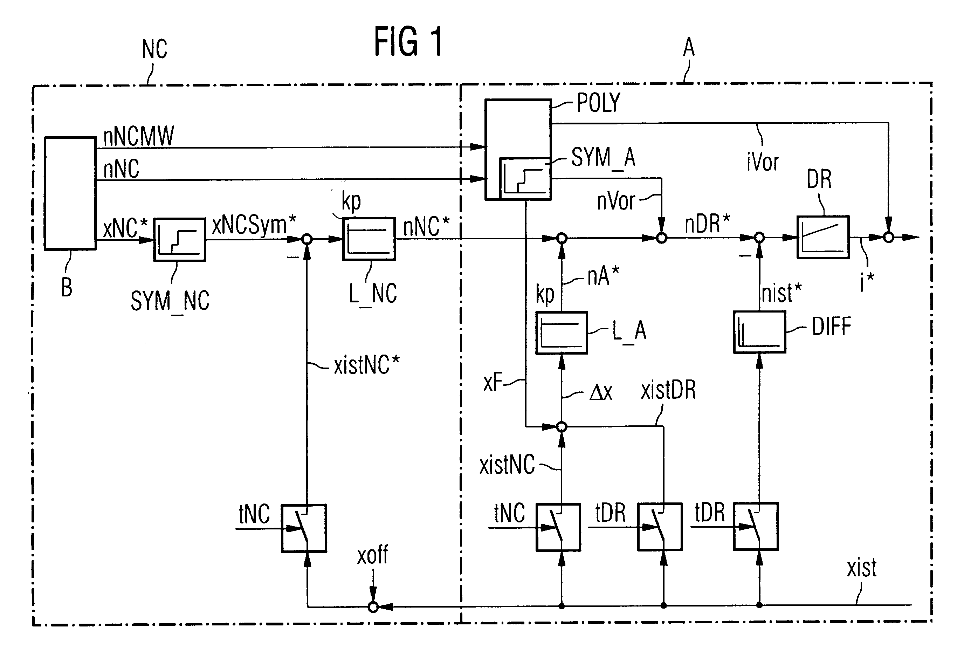

In der Darstellung gemäß FIG 1 ist ein Blockschaltbild einer P-Lageregelung (Proportional-Lageregelung) gezeigt, die auf eine numerische Steuerung NC und einen Antrieb A verteilt ist. Die gezeigte Regelungsstruktur besitzt den klassischen Aufbau einer Kaskadenregelung mit Stromregler (nicht gezeigt), übergeordnetem Drehzahlregler DR, welcher hier im Antrieb A angeordnet ist und mit einem vergleichsweise schnelleren Drehzahlreglertakt/Antriebstakt tDR läuft, sowie einem weiter übergeordneten Lageregler L_NC, der mit einem vergleichsweise langsameren Lagereglertakt/ Steuerungstakt tNC der Lageregelung läuft. Aufgrund der verteilten Lageregelung ist zusätzlich ein antriebsseitiger Lageregler L_A vorgesehen, der ebenfalls dem Drehzahlregler DR übergeordnet ist und mit dem schnelleren Drehzahlreglertakt läuft.

Eingangsseitig werden von einer steuerungsseitigen Bahnberechnung B ermittelte Lagesollwerte xNC* als Führungsgröße vorgegeben, die einer Symmetrierung SYM_NC unterzogen werden und als dynamisch angepasste Lagesollwerte xNCSym* bereitstehen. Auf diese Führungsgröße werden als Regelgröße Lageistwerte xistNC* zurückgeführt, die im Lagereglertakt tNC abgetastet werden, was in der Darstellung gemäß FIG 1 in Form eines mit tNC angesteuerten Schalters (Abtastglied) veranschaulicht ist. Dem Abtastglied kann auch eingangsseitig ein Lageoffsetwert xoff aufgeschaltet werden. Die Differenz von xNCSym* und xistNC* wird dem steuerungsseitigen Lageregler L_NC zugeführt und von dort aus als Geschwindigkeitssollwert nNC* über eine Schnittstelle zwischen der NC und dem Antrieb dem Drehzahlregelkreis DR zugeleitet. Letzterer stellt ausgangsseitig Stromsollwerte zur Ansteuerung des Stromreglers (nicht gezeigt) bereit. Die Ersatzzeitkonstante des Integrators entspricht dabei vorteilhafterweise dem Wert des Lagereglertaktes tNC. Der Drehzahlregelkreis wird antriebsseitig geschlossen, indem die im Drehzahlreglertakt tDR abgetasteten Lageistwerte in einem Differenzierer DIFF differenziert werden und als Drehzahlistwerte nist* eingangsseitig auf den Drehzahlreglereingang rückgekoppelt werden.

Außerdem besitzt die Regelungsstruktur gemäß FIG 1 die aus der EP 0844542 B1 bekannte antriebsseitige Lageregelung L_A mit zusätzlicher Rückführung von Lagedifferenzen im Drehzahlreglertakt tDR. Daraus ist ersichtlich, dass auf den Eingang des Drehzahlregelkreises DR neben den - wie oben geschildert - im Rückführzweig im Lagereglertakt tNC rückgeführten Lageistwerten xistNC* ein zweiter Rückführzweig vorgesehen ist, über den ebenfalls vom antriebsseitigen Lageregler L_A ermittelte Lageistwerte nA* auf den Eingang des Drehzahlregelkreises DR als Regelgröße rückgeführt werden.

In diesem zweiten Rückführzweig werden die Lageistwerte xist zum einen über ein Tastglied abgetastet, welches im Drehzahlreglertakt tDR angesteuert wird, wodurch im Drehzahlreglertakt abgetastete Lageistwerte xistDR bereitstehen. Zusätzlich werden über ein weiteres Abtastglied, das über den Lagereglertakt tNC angesteuert wird, weitere im Lagereglertakt abgetastete Lageistwerte xistNC ermittelt, welche von den im Drehzahlreglertakt erfassten Lageistwerten xistDR abgezogen werden, so dass Lagedifferenzen Δx bereitstehen, welche über den antriebsseitigen Lageregler L_A für den zweiten Rückführzweig als Regelgröße an den Eingang des Drehzahlregelkreises DR rückgeführt werden. Diese Lagedifferenzen Δx werden somit additiv zu den im Lagereglertakt tNC steuerungsseitig erfassten Lageistwerten xistNC* rückgeführt.

Durch die vorliegende Erfindung wird diese Regelungsstruktur nun um weitere Maßnahmen erweitert, welche die voranstehenden Vorteile gegenüber dem bekannten Stand der Technik bewirken. Vor allem wird es möglich, die Vorsteuerung und die Feininterpolation im Antrieb A im schnellen Antriebstakt tDR mit einer langsameren Bahnvorgabe im Takt tNC der NC auszuführen.

Dabei werden, wie vorangehend beschrieben, in jedem NC-Takt tNC ein Geschwindigkeitssollwert nNC* und die P-Verstärkung kp des NC-Lagereglers L_NC über eine geeignete Schnittstelle von der NC zum Antrieb A übertragen. Außerdem werden über diese Schnittstelle noch weitere in der steuerungsseitigen Bahnberechnung B bereitgestellte Größen zum Antrieb übertragen, nämlich die gewünschte Achsgeschwindigkeit nNC und die mittlere Achsgeschwindigkeit nNCMW während des letzten NC-Lagereglertaktes (quasi eine Positionsdifferenz).

Aus diesen Informationen (nNC, nNCMW) erzeugt der Antrieb A in einem Rechenmittel POLY, z.B. einem geeignet programmierten Signalprozessor oder ASIC (anwendungsspezifischer integrierter Schaltkreis) jeweils Polynomstücke 3. Grades, die für die Dauer eines NC-Lagereglertaktes tNC gültig sind. Sie werden so konstruiert, dass die Geschwindigkeit an den Polynomübergängen stetig ist. Das konstante Glied des Lagesollwert-Polynoms wird im Antrieb (wie bei Patentschrift EP 0844542B1) aus dem NC-Drehzahlsollwert nNC*, der P-Verstärkung kP des NC-Lagereglers L_NC und dem im Lagereglertakt tNC abgespeicherten Lageistwert xistNC ermittelt, um die Vorteile dieses Vorgehens zu erhalten.

Der restliche Anteil des Lagepolynoms 3. Grades ohne konstantes Glied wird im folgenden als Feinlageanteil xF bezeichnet. Damit werden die Lagesollwerte im Antrieb A feininterpoliert, indem der Feinlageanteil bzw. Feininterpolationsanteil xF eingangsseitig auf den Lageregler L_A aufgeschaltet werden. Außerdem können auch die Drehzahl und das Drehmoment im Antrieb A feininterpoliert vorgesteuert werden, denn das Polynom 3. Grades ist zweimal differenzierbar. Eine entsprechende Differenziation kann ebenfalls im Rechenmittel POLY erfolgen.

Für die Drehzahlvorsteuerung erhält man Polynomstücke vom Grad 2, und für das Drehmoment vom Grad 1. Die so erhaltenen Drehzahlvorsteuerwerte nVor werden eingangsseitig auf den Drehzahlregler DR aufgeschaltet, wobei in Verbindung mit den beiden Ausgangswerten nNC* der NC-Lagereglers L_NC und nA* der antriebseitigen Lagereglers vorgesteuerte Drehzahlsollwerte nDR* resultieren. Analog dazu werden in POLY ermittelte Drehmomentvorsteuerwerte iVor eingangsseitig auf den Stromregler (nicht gezeigt) aufgeschaltet. Die Drehmomentvorsteuerung ist allerdings nur möglich, wenn das Trägheitsmoment J des Antriebs bekannt ist. Ist das Trägheitsmoment J nicht bekannt, so wird man nur die Drehzahl vorsteuern.

Im folgenden sollen mögliche Berechnungsvorschriften für die Berechnung des Lagesollwertpolynoms 3. Grades zur Ermittlung der jeweiligen Feininterpolations- und Vorsteuerwerte mit dem Rechenmittel POLY beschrieben werden.

$$v_0(k) = nNC(k - 1) \tag{1}$$

$$a_0(k) = -2 \cdot (nNC(k) + 2 \cdot nNC(k - 1) - 3 \cdot nNCMW(k)) \tag{2}$$

$$r_0(k) = 6 \cdot (nNC(k) + nNC(k - 1) - 2 \cdot nNCMW(k)) \tag{3}$$

mit

k:       diskrete Zeit im Lagereglertakt,
$v_0(k)$:     Geschwindigkeit am Anfang von k,
$a_0(k)$:     Beschleunigung am Anfang von k und
$r_0(k)$:     Ruck am Anfang von k.

Damit lässt sich der Feinlageanteil xF(k,t) (ohne Symmetrierung) wie folgt bestimmen:

$$xF(k,t) = v_0(k) \cdot \frac{t}{tNC} + \frac{1}{2} \cdot a_0(k) \cdot \left(\frac{t}{tNC}\right)^2 + \frac{1}{6} \cdot r_0(k) \cdot \left(\frac{t}{tNC}\right)^3 \tag{4}$$

Für den Wert nVor(k,t) der Drehzahlvorsteuerung (ohne Symmetrierung) ergibt sich daraus durch einmaliges Differenzieren:

$$nVor(k,t) = v_0(k) + a_0(k) \cdot \frac{t}{tNC} + \frac{1}{2} \cdot r_0(k) \cdot \left(\frac{t}{tNC}\right)^2 \tag{5}$$

Erneutes Differenzieren führt dann zum Wert iVor(k,t) für eine Drehmomentvorsteuerung:

$$iVor(k,t) = J \cdot \left( a_0(k) + r_0(k) \cdot \frac{t}{tNC} \right) \qquad (6)$$

Die Vorsteuerung sollte außerdem zusätzlich symmetriert (dynamisch angepasst) werden, um unerwünschte Reglerbewegungen bis zum Wirksamwerden der Vorsteuerung zu vermeiden. Im Antrieb symmetriert werden die Übergabewerte nNC und nNCMW, bevor daraus nach obigen Gleichungen (1), (2) und (3) die Koeffizienten für das Lagesollwert-Polynom bestimmt werden. Die Symmetrierzeit wird dem Antrieb A dazu von der NC vorgegeben. Bei der Symmetrierung wird der Lagesollwert xNC* durch die bereits weiter vorne erwähnte Symmetriereinheit SYM_NC dynamisch angepasst. Das gleiche erfolgt für den Feininterpolationsanteil xF und den Drehzahlvorsteuerwert nVor, indem diese durch eine vorzugsweise in der Berechnungseinheit POLY integrierte Symmetriereinheit SYM_A um die Symmetrierzeit verzögert werden.

Falls keine Drehmomentvorsteuerung möglich ist (z.B. Trägheitsmoment J des Antriebs A nicht bekannt), wird der Drehzahlvorsteuerwert nVor nicht verzögert. Die Symmetrierzeit wird von der NC dem Antrieb A übergeben und dieser realisiert nun die Verzögerung für den Feininterpolationsanteil xF und die Drehzahlvorsteuerung nVor. Das konstante Glied des Lagesollwertpolynoms wird von der NC symmetriert.

Mit diesen Maßnahmen gemäß der Erfindung sind bislang unerreichte Weggenauigkeiten mit weichen Drehmomentverläufen erzielbar, d.h. höchste Präzision und beste Schonung der mechanischen Bauteile, wobei die Vorteile nach der Patentschrift EP 0844542 B1 weiterhin aufrecht erhalten werden können. Die Schnittstelle zwischen NC und Antrieb wird dabei vorteilhaft so gewählt, dass möglichst wenige Daten ausgetauscht werden müssen.

Dies wird unter anderem durch das Erkennen der Verbesserungsmöglichkeiten und das Erarbeiten der beschriebenen Regelungsstruktur erreicht, die die Aufgaben für die NC und den Antrieb A so verteilt, dass höchste Bahngenauigkeit mit einer günstigen Rechenzeitbilanz und einer schlanken Kommunikationsschnittsschnittstelle entsteht.

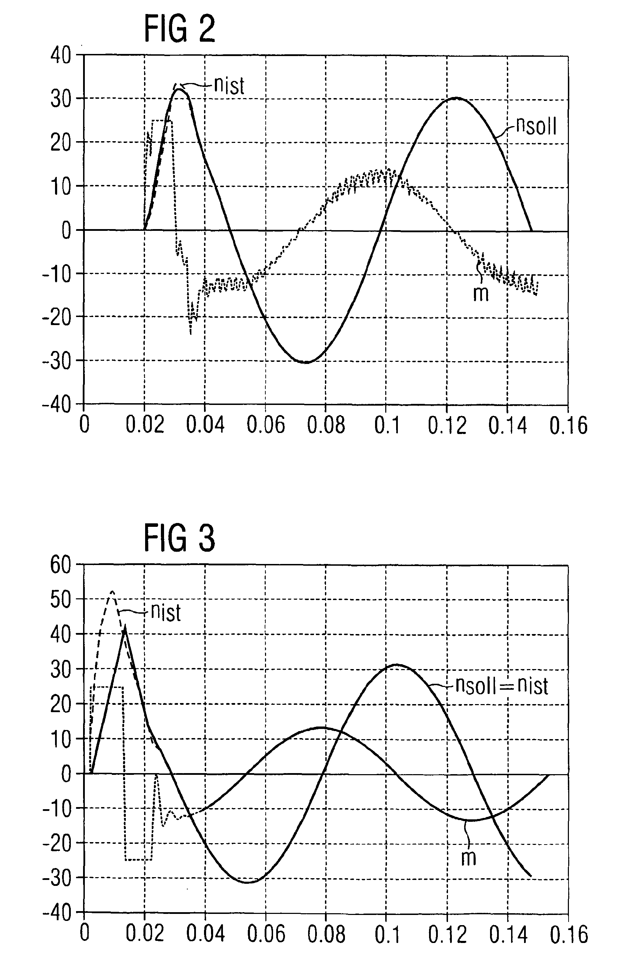

Die Darstellungen gemäß FIG 2 und FIG 3 zeigen Simulationsergebnisse bei sinusförmigem Lagesollwert. Es ist in beiden Figuren jeweils der Drehzahlsollwert nsoll, der Drehzahlistwert nist sowie das zugehörige Drehmoment m (mathematische Ableitung der Drehzahl) dargestellt. Die FIG 2 zeigt dabei die Verläufe, die mit dem Verfahren aus der Patentschrift EP 0 844 542 B1 erzielt werden. Das zu Beginn sichtbare Einschwingverhalten (bis 0.04 s) ergibt sich aus den Startbedingungen der Simulation und sollte ignoriert werden. Im oszillierenden Verlauf des Drehmomentes m wird der Lagereglertakt sichtbar. Außerdem erkennt man eine - wenn auch kleine - Soll-Ist-Differenz der Drehzahl, was durch die Bezeichnung nsoll~nist zum Ausdruck gebracht werden soll.

Die Darstellung nch FIG 3 wurde unter gleichen Bedingungen, jedoch mit dem beschriebenen erfindungsgemäßen Verfahren mit einer Drehzahl- und Drehmomentvorsteuerung erzeugt. Das Drehmoment m zeigt keine Einbrüche mehr und eine Soll-Ist-Differenz der Drehzahl kann nicht mehr ausgemacht werden (nsoll=nist). Auch hier muss das Einschwingverhalten zu Beginn der Simulation ignoriert werden.

**Patentansprüche**

1. Steuerungsverfahren zur Bewegungsführung von numerisch gesteuerten Werkzeugmaschinen, Robotern oder dergleichen mit einer in einem Antriebsteil (A) angeordneten Drehzahlregelung (DR) mit einem Drehzahlregeltakt (tDR) und einer übergeordneten, auf ein Steuerungteil (NC) und den Antriebsteil (A) verteilten Lageregelung (L_NC;L_A), wobei von dem steuerungsseitigen Teil der Lageregelung (L_NC) in einem vergleichsweise langsameren Lageregeltakt (tNC) Geschwindigkeitssollwerte (nNC*) als Führungsgröße vorgegeben werden, **dadurch gekennzeichnet, dass** diese antriebsseitig zur Ermittlung eines konstanten Anteils eines Lagesollwert-Polynoms dienen, wobei ein variabler Anteil des Lagesollwert-Polynoms anhand einer von einer steuerungsseitigen Bahnberechnung (B) jeweils im Lageregeltakt (tNC) vorgegebenen gewünschten Achsgeschwindigkeit (nNC) und mittleren Achsgeschwindigkeit (nNCMW) während des letzten Lageregeltaktes (tNC) antriebsseitig im Drehzahlregeltakt (tDR) als Feinlageanteil (xF) ermittelt wird, der eingangsseitig auf den antriebsseitigen Teil der Lageregelung (L_A) aufgeschaltet wird und zur Lage-Feininterpolation dient.

2. Steuerungsverfahren zur Bewegungsführung nach Anspruch 1, **dadurch gekennzeichnet, dass** zur Ermittlung des konstanten Anteils des Lagesollwert-Polynoms im Lageregeltakt (tNC) erfasste Lageistwerte (xistNC) als erste Regelgröße eingangsseitig auf den steuerungsseitigen Teil der Lageregelung (L_NC) zurückgeführt werden und zusätzlich die Differenz (Δx) aus im Drehzahlregeltakt (tDR) erfassten Lageistwerten (xistD) und im Lageregeltakt (tNC) erfassten Lageistwerten (xistNC) als zweite Regelgröße eingangsseitig auf den antriebsseitigen Teil der Lageregelung (L_A) zurückgeführt wird, wobei die Verknüpfung der Ausgangswerte (nNC*, nA*) der beiden übergeordneten Lageregelungsteile (L_NC;L_A) der Drehzahlregelung (DR) als Geschwindigkeitssollwerte (nD*) zugeführt werden.

3. Steuerungsverfahren zur Bewegungsführung nach Anspruch 1 oder 2, **dadurch gekennzeichnet, dass** der antriebsseitige Teil der Lageregelung (L_A) mit derselben Proportional-Verstärkung (kP) wie der steuerungsseitige Teil der Lageregelung (L_NC) betrieben wird.

4. Steuerungsverfahren zur Bewegungsführung nach einem der vorangehenden Ansprüche, **dadurch gekennzeichnet, dass** das Lagesollwert-Polynom antriebsseitig aus Polynomstücken, insbesondere als Spline-Funktion, ermittelt wird, die jeweils für die Dauer eines Lageregeltaktes (tNC) gültig sind.

5. Steuerungsverfahren zur Bewegungsführung nach Anspruch 4, **dadurch gekennzeichnet, dass** das Lagesollwert-Polynom antriebsseitig derart ermittelt wird, dass die Geschwindigkeit an den Polynomübergängen stetig ist.

6. Steuerungsverfahren zur Bewegungsführung nach einem der vorangehenden Ansprüche, **dadurch gekennzeichnet, dass** als Lagesollwert-Polynom antriebsseitig ein Polynom vom Grad 3 oder höher ermittelt wird, dessen variabler Anteil (xF) zur Ermittlung eines Drehzahlvorsteuerwertes (nVor) differenziert wird, welcher (nVor) der Drehzahlregelung (DR) eingangseitig aufgeschaltet wird.

7. Steuerungsverfahren zur Bewegungsführung nach Anspruch 6, **dadurch gekennzeichnet, dass** ein steuerungsseitiger Lagesollwert (xNC*) und der variable Anteil (xF) des Lagesollwert-Polynoms dynamisch angepasst werden, indem diese um eine Symmetrierzeit (SYM_NC;SYM_A) verzögert werden.

8. Steuerungsverfahren zur Bewegungsführung nach einem der vorangehenden Ansprüche, **dadurch gekennzeichnet, dass** als Lagesollwert-Polynom antriebsseitig ein Polynom vom Grad 3 oder höher ermittelt wird, dessen variabler Anteil (xF) zur Ermittlung eines Drehmomentvorsteuerwertes zweimal differenziert wird, wobei anhand des erhaltenen Wertes und einem Trägheitsmoment (J) des Antriebs der Drehmomentvorsteuerwert (iVor) bestimmt wird, welcher einer der Drehzahlregelung (DR) nachgeschalteten Stromregelung eingangseitig aufgeschaltet wird.

9. Steuerungsverfahren zur Bewegungsführung nach Anspruch 7 und 8, **dadurch gekennzeichnet, dass** der Drehzahlvorsteuerwert (nVor) ebenfalls um die Symmetrierzeit (SYM_A) verzögert wird.

10. Regelungsvorrichtung zur Bewegungsführung von numerisch gesteuerten Werkzeugmaschinen, Robotern oder dergleichen mit

   - einem antriebsseitigen (A) Drehzahlregler (DR) mit einem Drehzahlreglertakt (tDR),
   - einem übergeordneten antriebsseitigen (A) Lageregler (L_A) mit dem Drehzahlreglertakt (tDR) und
   - einem ebenfalls übergeordneten steuerungsseitigen (NC) Lageregler (L_NC) mit einem vergleichsweise langsameren Lagereglertakt (tNC), der Geschwindigkeitssollwerte (nNC*) als Führungsgröße liefert,

   **dadurch gekennzeichnet, dass** die Regelungsvorrichtungangepasst ist zur Durch führung eines Verfahrens nach Anspruch wobei

   - ein antriebsseitiges Rechenmittel (POLY), dem von einer steuerungsseitigen Bahnberechnung (B) jeweils im Lagereglertakt (tNC) eine gewünschte Achsgeschwindigkeit (nNC) und eine mittlere Achsgeschwindigkeit (nNCMW) während des letzten Lageregeltaktes (tNC) vorgegeben werden, mit dem anhand dieser Informationen im Drehzahlreglertakt (tDR) ein Feinlageanteil (xF) ermittelbar ist, mit dem der antriebsseitige Lageregler (L_A) eingangsseitig angesteuert wird.

11. Regelungsvorrichtung zur Bewegungsführung nach Anspruch 10, **dadurch gekennzeichnet, dass**

   - im Lagereglertakt (tNC) erfasste Lageistwerte (xistNC) dem steuerungsseitigen Teil der Lageregelung (L_NC) als eingangsseitige Regelgröße dienen,
   - die Differenz ($\Delta$x) aus im Drehzahlregeltakt (tDR) erfassten Lageistwerten (xistD) und im Lageregeltakt (tNC) erfassten Lageistwerten (xistNC) dem antriebsseitigen Lageregler (L_A) als eingangsseitige Regelgröße dient und

   - die Verknüpfung der Ausgangswerte (nNC*, nA*) der beiden übergeordneten Lageregler (L_NC;L_A) dem Drehzahlregler (DR) als Geschwindigkeitssollwerte ($nD_R$*) zugeführt werden.

**12.** Regelungsvorrichtung zur Bewegungsführung nach Anspruch 10 oder 11, **dadurch gekennzeichnet, dass** der antriebsseitige Lageregler (L_A) mit derselben Proportional-Verstärkung (kP) arbeitet wie der steuerungsseitige Lageregler (L_NC).

**13.** Regelungsvorrichtung zur Bewegungsführung nach einem der vorangehenden Ansprüche 10 bis 12, **dadurch gekennzeichnet, dass** das Rechenmittel (POLY) den Feinlageanteil (xF) in Form von Polynomstücken eines Lagesollwert-Polynoms, insbesondere vom Grad 3 oder höher, liefert, die jeweils für die Dauer eines Lagereglertaktes (tNC) gültig sind.

**14.** Regelungsvorrichtung zur Bewegungsführung nach Anspruch 13, **dadurch gekennzeichnet, dass** Polynomstücke derart bereitstellbar sind, dass die Geschwindigkeit an den Polynomübergängen stetig ist.

**15.** Regelungsvorrichtung zur Bewegungsführung nach einem der Ansprüche 13 oder 14, **dadurch gekennzeichnet, dass** das Rechenmittel (POLY) ein Mittel zur Differenziation umfasst, mit dem Polynomstücke zur Ermittlung eines Drehzahlvorsteuerwertes (nVor) differenzierbar sind, welcher (nVor) dem Drehzahlregler (DR) eingangsseitig aufgeschaltet wird.

**16.** Regelungsvorrichtung zur Bewegungsführung nach Anspruch 15, **dadurch gekennzeichnet, dass**

- dem steuerungsseitigen Lageregler (L_NC) ein Mittel zur Symmetrierung (SYM_NC) von Lagesollwerten (xNC*) vorgeschaltet ist und
- das antriebsseitige Rechenmittel (POLY) ein weiteres Mittel zur Symmetrierung (SYM_A) des Feinlageanteils (xF) umfasst.

**17.** Regelungsvorrichtung zur Bewegungsführung nach einem der Ansprüche 15 oder 16, **dadurch gekennzeichnet, dass** mit dem Mittel zur Differenziation zur Ermittlung eines Drehmomentvorsteuerwertes Polynomstücke zweimal differenzierbar sind, wobei anhand des erhaltenen Wertes und einem Trägheitsmoment (J) des Antriebs der Drehmomentvorsteuerwert (iVor) bestimmbar ist, welcher (iVor) einem dem Drehzahlregler(DR) nachgeschalteten Stromregler eingangsseitig aufschaltbar ist.

**18.** Regelungsvorrichtung zur Bewegungsführung nach Anspruch 17, **dadurch gekennzeichnet, dass** das antriebsseitige Mittel zur Symmetrierung (SYM_A) auch zur zeitlichen Verzögerung des Drehzahlvorsteuerwertes (nVor) dient.

**Claims**

**1.** Method of control for the movement control of numerically controlled machine tools, robots or the like, with a speed control system (DR) with a speed controller clock (tDR) arranged in a drive part (A) and a higher-level position control system (L_NC; L_A), distributed between a control part (NC) and the drive part (A), with setpoint speed values (nNC*) being preset as a reference variable by the control-side part of the position control system (L_NC) in a comparatively slower position control clock (tNC), **characterized in that** said setpoint speed values serve on the drive side for determining a constant component of a setpoint position value polynomial, a variable component of the setpoint position value polynomial being determined on the drive side in the speed control clock (tDR) as a fine position component (xF) on the basis of a desired axle speed (nNC), preset by a control-side path computation (B) in the position control clock (tNC) in each case, and the average axle speed (nNCMW) during the last position control clock (tNC), and is fed on the input side to the drive-side part of the position control system (L_A) and serves for fine position interpolation.

**2.** Method of control for movement control according to Claim 1, **characterized in that** actual position values (xistNC) acquired in the position control clock (tNC) for determining the constant component of the setpoint position value polynomial are fed back as the first controlled variable on the input side to the control-side part of the position control system (L_NC) and the difference ($\Delta$x) from actual position values (xistD) acquired in the speed control clock (tDR) and actual position values (xistD) acquired in the position control clock (tNC) is additionally fed back as the second controlled variable on the input side to the drive-side part of the position control system (L_A), the logical combination of the output values (nNC*, nA*) of the two higher-level position control parts (L_NC;L_A) being supplied to the speed control system (DR) as setpoint speed values (nD*).

3. Method of control for movement control according to Claim 1 or 2, **characterized in that** the drive-side part of the position control system (L_A) is operated with the same proportional gain (kP) as the control-side part of the position control system (L_NC).

4. Method of control for movement control according to one of the preceding claims, **characterized in that** the setpoint position value polynomial on the drive side is determined from polynomial segments which are in each case valid for the duration of a position control clock (tNC), in particular as a spline function.

5. Method of control for movement control according to Claim 4, **characterized in that** the setpoint position value polynomial is determined on the drive side in such a way that the speed at the polynomial transitions is constant.

6. Method of control for movement control according to one of the preceding claims, **characterized in that** a polynomial of the third degree or higher is determined as the setpoint position value polynomial on the drive side, the variable component (xF) of which polynomial is differentiated for determining a speed pre-control value (nVor), which (nVor) is fed on the input side to the speed control system (DR).

7. Method of control for movement control according to Claim 6, **characterized in that** a control-side setpoint position value (xNC*) and the variable component (xF) of the setpoint position value polynomial are dynamically adapted by delaying them by a symmetrizing time (SYM NC;SYM A).

8. Method of control for movement control according to one of the preceding claims, **characterized in that** a polynomial of the third degree or higher is determined on the drive side as the setpoint position value polynomial, the variable component (xF) of which is differentiated twice for determining a torque pre-control value, the torque pre-control value (iVor) being determined on the basis of the value obtained and a moment of inertia (J) of the drive and fed on the input side to a current control system arranged downstream of the speed control system (DR).

9. Method of control for movement control according to Claims 7 and 8, **characterized in that** the speed pre-control value (nVor) is likewise delayed by the symmetrizing time (SYM_A).

10. Control device for the movement control of numerically controlled machine tools, robots or the like having

    - a drive-side (A) speed controller (DR) with a speed controller clock (tDR),
    - a higher-level drive-side (A) position controller (L_A) with a speed controller clock (tDR) and
    - a likewise higher-level control-side (NC) position controller (L_NC) with a comparatively slower position controller clock (tNC), which supplies setpoint speed values (nNC*) as a reference variable,

    **characterized in that** the control device is adapted for the implementation of a method according to Claim 1, with

    - a drive-side computing means (POLY), which is preset with a desired axle speed (nNC) and an average axle speed (nNCMW) during the last position controller clock (tNC) by a control-side path computation (B), in each case in the position controller clock (tNC), with which means a fine position component (xF) can be determined on the basis of this information in the speed controller clock (tDR) and used to activate the drive-side position controller (L_A) on the input side.

11. Control device for movement control according to Claim 10,
    **characterized in that**

    - actual position values (xistNC) acquired in the position controller clock (tNC) serve as an input-side controlled variable for the control-side part of the position control system (L_NC),
    - the difference ($\Delta$x) from actual position values (xistD) acquired in the speed controller clock (tDR) and actual position values (xistNC) acquired in the position controller clock (tNC) serves as an input-side controlled variable for the drive-side position controller (L_A) and
    - the logical combination of the output values (nNC*, nA*) of the two higher-level position controllers (L_NC;L_A) is fed to the speed controller (DR)as setpoint speed values (nDR*).

12. Control device for movement control according to Claim 10 or 11, **characterized in that** the drive-side position controller (L_A) operates with the same proportional gain (kP) as the control-side position controller (L_NC).

13. Control device for movement control according to one of the preceding Claims 10 to 12, **characterized in that** the computing means (POLY) supplies the fine position component (xF) in the form of polynomial segments of a setpoint position value polynomial, in particular of the third degree or higher, which are in each case valid for the duration of a position controller clock (tNC).

14. Control device for movement control according to Claim 13, **characterized in that** polynomial segments can be provided in such a way that the speed at the polynomial transitions is constant.

15. Control device for movement control according to either of Claims 13 and 14, **characterized in that** the computing means (POLY) comprises a means for differentiation which can be used to differentiate polynomial segments for the determination of a speed pre-control value (nVor), which (nVor) is fed to the speed controller (DR) on the input side.

16. Control device for movement control according to Claim 15, **characterized in that**

- a means for symmetrizing (SYM_NC) setpoint position values (xNC*) is arranged upstream of the control-side position controller (L_NC) and
- the drive-side computing means (POLY) comprises a further means for symmetrizing (SYM_A) the fine position component (xF).

17. Control device for movement control according to either of Claims 15 and 16, **characterized in that** differentiation can be performed twice with the means for the differentiation of polynomial segments for determining a torque pre-control value, it being possible on the basis of the value obtained and a moment of inertia (J) of the drive to determine the torque pre-control value (iVor), which (iVor) can be fed on the input side to a current controller arranged downstream of the speed controller (DR).

18. Control device for movement control according to Claim 17, **characterized in that** the drive-side means for symmetrizing (SYM_A) also serves for the time delay of the speed pre-control value (nVor).


**Revendications**

1. Procédé de commande pour la commande de mouvements de machines-outils à commande numérique, de robots ou autres avec une régulation de vitesse de rotation (DR) disposée dans une partie motrice (A) ayant une période de régulation de vitesse de rotation (tDR) et une régulation de position (L_NC ; L_A) de rang supérieur répartie sur une partie de commande (NC) et sur la partie motrice (A), la partie, côté commande, de la régulation de position (L_NC) prescrivant des valeurs de consigne de vitesse (nNC*) comme grandeur de commande selon une période de régulation de position (tNC) comparativement plus lente, **caractérisé par le fait que** ces valeurs de consigne de vitesse servent côté moteur à la détermination d'une part constante d'un polynôme de valeur de consigne de position, une part variable du polynôme de valeur de consigne de position étant déterminée à l'aide d'une vitesse d'axe souhaitée (nNC) prescrite par un calcul de trajectoire (B) côté commande respectivement selon la période de régulation de position (tNC) et à l'aide d'une vitesse d'axe moyenne (nNCMW) pendant la dernière période de régulation de position (tNC) côté moteur selon la période de régulation de vitesse de rotation (tDR) comme part de position précise (xF) qui est appliquée côté entrée à la partie côté moteur de la régulation de position (L_A) et qui sert à l'interpolation précise de position.

2. Procédé de commande pour la commande de mouvements selon la revendication 1, **caractérisé par le fait que** des valeurs réelles de position (xistNC) acquises pour la détermination de la part constante du polynôme de valeur de consigne de position selon la période de régulation de position (tNC) sont renvoyées comme première grandeur réglée côté entrée à la partie côté commande de la régulation de position (L_NC) et, en plus, la différence ($\Delta$x) entre des valeurs réelles de position (xistD) acquises selon la période de régulation de vitesse de rotation (tDR) et des valeurs réelles de position (xistNC) acquises selon la période de régulation de position (tNC) est renvoyée comme deuxième grandeur réglée côté entrée à la partie côté moteur de la régulation de position (L_A), la combinaison des valeurs de sortie (nNC*, nA*) des deux parties de régulation de position (L_NC ; L_A) de rang supérieur étant envoyée à la régulation de vitesse de rotation (DR) comme valeurs de consigne de vitesse (nD*).

3. Procédé de commande pour la commande de mouvements selon la revendication 1 ou 2, **caractérisé par le fait que** la partie côté moteur de la régulation de position (L_A) est contrôlée avec la même amplification proportionnelle (kP) que la partie côté commande de la régulation de position (L_NC).

4.  Procédé de commande pour la commande de mouvements selon l'une des revendications précédentes, **caractérisé par le fait que** le polynôme de valeur de consigne de position est déterminé côté moteur à partir de fragments de polynôme, notamment sous forme de fonction spline, qui sont valables respectivement pour la durée d'une période de régulation de position (tNC).

5.  Procédé de commande pour la commande de mouvements selon la revendication 4, **caractérisé par le fait que** le polynôme de valeur de consigne de position est déterminé côté moteur de telle sorte que la vitesse aux transitions de polynôme est stable.

6.  Procédé de commande pour la commande de mouvements selon l'une des revendications précédentes, **caractérisé par le fait que** l'on détermine côté moteur comme polynôme de valeur de consigne de position un polynôme de degré 3 ou plus dont la partie variable (xF) est différentiée pour la détermination d'une valeur de commande préalable de vitesse de rotation (nVor), laquelle (nVor) est appliquée côté entrée à la régulation de vitesse de rotation (DR).

7.  Procédé de commande pour la commande de mouvements selon la revendication 6, **caractérisé par le fait qu'**une valeur de consigne de position (xNC*) côté commande et la partie variable (xF) du polynôme de valeur de consigne de position sont adaptées dynamiquement du fait que celles-ci sont retardées d'un temps d'équilibrage (SYM_NC ; SYM_A).

8.  Procédé de commande pour la commande de mouvements selon l'une des revendications précédentes, **caractérisé par le fait que** l'on détermine côté moteur comme polynôme de valeur de consigne de position un polynôme de degré 3 ou plus dont la partie variable (xF) est différentiée deux fois pour la détermination d'une valeur de commande préalable de couple, la valeur de commande préalable de couple (iVor) étant déterminée à l'aide de la valeur obtenue et d'un moment d'inertie (J) de l'élément moteur, laquelle valeur de commande préalable de couple est appliquée côté entrée à une régulation de courant placée en aval de la régulation de vitesse de rotation (DR).

9.  Procédé de commande pour la commande de mouvements selon les revendications 7 et 8, **caractérisé par le fait que** la valeur de commande préalable de vitesse de rotation (nVor) est également retardée du temps d'équilibrage (SYM_A).

10. Dispositif de régulation pour la commande de mouvements de machines-outils à commande numérique, de robots ou autres comprenant :

    - un régulateur de vitesse de rotation (DR) côté moteur (A) avec une période de régulateur de vitesse de rotation (tDR)
    - un régulateur de position (L_A) de rang supérieur et situé côté moteur (A) avec la période de régulateur de vitesse de rotation (tDR) et
    - un régulateur de position (L_NC) également de rang supérieur et situé côté commande (NC) avec une période de régulateur de position (tNC) comparativement plus lente, qui fournit des valeurs de consigne de vitesse (nNC*) comme grandeur de commande,

    **caractérisé par le fait que** le dispositif de régulation est adapté à la mise en œuvre d'un procédé selon la revendication 1, avec un moyen de calcul (POLY) côté moteur auquel un calcul de trajectoire (B) côté commande prescrit à chaque fois selon la période de régulateur de position (tNC) une vitesse d'axe souhaitée (nNC) et une vitesse d'axe moyenne (nNCMW) pendant la dernière période de régulation de position (tNC) et avec lequel on peut déterminer à l'aide de ces informations selon la période de régulateur de vitesse de rotation (tDR) une part de position précise (xF) avec laquelle le régulateur de position (L_A) côté moteur est commandé côté entrée.

11. Dispositif de régulation pour la commande de mouvements selon la revendication 10, **caractérisé par le fait que**

    - des valeurs réelles de position (xistNC) acquises selon la période de régulateur de position (tNC) servent à la partie côté commande de la régulation de position (L_NC) comme grandeur réglée côté entrée,
    - la différence (Δx) entre des valeurs réelles de position (xistD) acquises selon la période de régulation de vitesse de rotation (tDR) et des valeurs réelles de position (xistNC) acquises selon la période de régulation de position (tNC) sert au régulateur de position (L_A) côté moteur comme grandeur réglée côté entrée et
    - la combinaison des valeurs de sortie (nNC*, nA*) des deux régulateurs de position (L_NC ; L_A) de rang supérieur est envoyée au régulateur de vitesse de rotation (DR) comme valeurs de consigne de vitesse ($nD_R$*).

**12.** Dispositif de régulation pour la commande de mouvements selon la revendication 10 ou 11, **caractérisé par le fait que** le régulateur de position (L_A) côté moteur travaille avec la même amplification proportionnelle (kP) que le régulateur de position (L_NC) côté commande.

**13.** Dispositif de régulation pour la commande de mouvements selon l'une des revendications précédentes 10 à 12, **caractérisé par le fait que** le moyen de calcul (POLY) fournit la part de position précise (xF) sous la forme de fragments de polynôme d'un polynôme de valeur de consigne de position, notamment de degré 3 ou plus, qui sont valables à chaque fois pour la durée d'une période de régulateur de position (tNC).

**14.** Dispositif de régulation pour la commande de mouvements selon la revendication 13, **caractérisé par le fait que** des fragments de polynôme peuvent être mis à disposition de telle sorte que la vitesse aux transitions de polynôme est stable.

**15.** Dispositif de régulation pour la commande de mouvements selon l'une des revendications 13 ou 14, **caractérisé par le fait que** le moyen de calcul (POLY) comprend un moyen pour la différentiation avec lequel des fragments de polynôme sont différentiables pour la détermination d'une valeur de commande préalable de vitesse de rotation (nVor), laquelle (nVor) est appliquée côté entrée au régulateur de vitesse de rotation (DR).

**16.** Dispositif de régulation pour la commande de mouvements selon la revendication 15, **caractérisé par le fait que**

- un moyen pour l'équilibrage (SYM_NC) de valeurs de consigne de position (xNC*) est placé en amont du régulateur de position (L_NC) côté commande et
- le moyen de calcul (POLY) côté moteur comprend un autre moyen pour l'équilibrage (SYM_A) de la part de position précise (xF).

**17.** Dispositif de régulation pour la commande de mouvements selon l'une des revendications 15 ou 16, **caractérisé par le fait que**, avec le moyen pour la différentiation, des fragments de polynôme sont différentiables deux fois pour la détermination d'une valeur de commande préalable de couple, la valeur de commande préalable de couple (iVor) étant déterminable à l'aide de la valeur obtenue et d'un moment d'inertie (J) de l'élément moteur, laquelle valeur de commande préalable de couple (iVor) peut être appliquée côté entrée à un régulateur de courant placé en aval du régulateur de vitesse de rotation (DR).

**18.** Dispositif de régulation pour la commande de mouvements selon la revendication 17, **caractérisé par le fait que** le moyen côté moteur pour l'équilibrage (SYM_A) sert aussi au retardement de la valeur de commande préalable de vitesse de rotation (nVor).

# FIG 1

EP 1 229 411 B1

## FIG 2

## FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0844542 B1